# EUROPEAN PATENT APPLICATION

(11) **EP 3 591 561 A1**
(43) Date of publication of application: **08.01.2020**
(21) Application number: 18382504.1
(22) Date of filing: 06.07.2018
(51) Int. Cl.: G06F 21/62, G06N 3/04

(54) **AN ANONYMIZED DATA PROCESSING METHOD AND COMPUTER PROGRAMS THEREOF**

(71) Applicant: Synergic Partners S.L.U., 28050 Madrid (ES)
(72) Inventor: González Tortosa, Santiago, 28050 Madrid (ES); Fernández Viz, Antonio, 28050 Madrid (ES)
(74) Representative: Carlos Hernando, Borja

(57) **Abstract**

An anonymized data processing method and computer programs thereof. Data about a user is stored in a database divided into different categories, a first category including data not involving direct identification for the user and a second category including data involving direct identification for the user. The data included in the second category is encrypted, providing pseudoanonymized data. The method comprises executing a first process on said first category, said first process finding combinations of columns in a dataset with a high risk of containing information to infer who is the user associated with the data through detecting anomalies with a first neural network including an autoencoder; and executing a second process on said second category, said second process transforming and submitting the pseudoanonymized data to a second neural network including a variational autoencoder that mixes and samples the data to provide an encrypted data and an error as transformed output.

## Description

### Field of the invention

The present invention present invention proposes an anonymized data processing method, and computer program products thereof.

### Background of the invention

Patent application US-A1-2016071010 discloses a data category identification method based on a deep neural network, including establishing an initial deep neural network; generating a linear category analysis function after data category information is added to a locally saved initial linear category analysis function according to an input training sample vector set; acquiring an optimization function of the initial deep neural network according to a locally saved unsupervised auto-encoding model optimization function and the linear category analysis function; acquiring a parameter of the initial deep neural network according to the optimization function of the initial deep neural network; establishing a deep neural network according to a locally saved classification neural network, the initial deep neural network, and the parameter of the initial deep neural network, where the deep neural network has a multi-layer network structure that includes at least an input layer and an output layer; and inputting to-be-identified data to the input layer of the deep neural network, and acquiring information of a category to which the to-be-identified data belongs, where the information of the category is output by the output layer of the deep neural network. Unlike present invention, this data category identification method is not based in the use of a double algorithm to generate anonymized data.

Patent application US-A1-2014380489 discloses a system and method for dynamic anonymization of a dataset including decomposing, by at least one processor, the dataset into a plurality of subsets and applying an anonymization strategy on each subset of the plurality of subsets. The system and method further includes aggregating, the individually anonymized subsets to provide an anonymized dataset. Thus, this patent application deals with the problem of anonymization by parts, in the sense that it divides the data in its sets according to some criteria and from there, the anonymizer chooses and applies an anonymization technique and algorithm (in which it does not enter) specific to each one.

Patent CN-B-101834872 proposes an anonymized data processing method based on grade priority, including steps such as pre-processing distributed data and establishing a normalization or homogenization, calculating the degrees of all nodes to find the node with the maximum degree, obtain the global optimum node and calculate the loss of information from the nodes in a set of K-min; taking the node with the minimum information loss as the global optimal node; and generalize all the data distributed according to the generalized mode of the optimal node and distribute the generalized result obtained.

Patent US-B2-9129117 discloses an anonymous dataset generation method. A critical attribute set and a quasi-identifier (QID) set are acquired, and one of the critical attribute and the quasi-identifier is set as an anchor attribute. An attribute sequence and an equivalence table are generated according to the quasi-identifier set and the critical attribute set. A data cluster and a cluster table are generated according to the equivalence table. The content of the cluster table is generalized to generate and output an anonymous dataset corresponding to an original dataset. A risk evaluation method for an anonymous dataset calculates data weight to extract distinctive data and to attacking defects of the anonymous dataset according to the distinctive data, thereby enhancing a risk evaluation efficiency of the anonymous dataset.

Other documents know in the field are CN-B-102867022 disclosing a method for partial suppression of certain data sets that may still be sensitive after anonymization, and CN-A-106021541 which follows the previous criterion of detecting attributes that could be quasi-identifiers and to establish if they have to be deleted through successive iterations.

The cited patents and/or patent applications that aim to anonymize data do not use techniques based on neural networks, so they are not comparable in performance to the present invention.

More solutions are therefore needed to anonymize data in order to reduce to the maximum the possibility of inference of the person associated with the data.

### Description of the Invention

To that end, embodiments of the present invention propose an anonymized data processing method, wherein data about a user is stored in a memory or database. According to the proposed method, the data is stored divided into at least two different categories: a first category including data not involving direct identification for the user, for example age, gender, salary, among others, and a second category including data involving direct identification for the user, for example payment cards identification numbers, telephone numbers, personal identification numbers, etc. The data included in the second category is encrypted via an encryption function such as a SHA-256 hash, providing pseudoanonymized data.

Moreover, the proposed method comprises the execution, by a data processing apparatus, preferably having a Graphical Processing Unit (GPU), of a first process (or algorithm) on said first category that finds combinations of columns in a dataset (where rows represent people and the columns their attributes) with a high risk of containing information to infer who is the user associated with the data through detecting anomalies with a first neural network such as an autoencoder. In addition, the proposed method also comprises, the execution, by the same or another data processing apparatus, of a second process (or algorithm) on said second category, transforming and submitting the pseudoanonymized data to a second neural network such as a variational autoencoder that mixes and samples the data to provide an encrypted data and an error as transformed output.

In an embodiment, the data included in the first category is separated in balanced variables and unbalanced variables before the execution of the first process, taking into account a percentage of different values in each variable. Besides, the first neural network, separately, trains the columns of balanced and unbalanced variables, by:
a) adapting hyperparameters of the first neural network to the data, and calculating reconstruction errors in each row, wherein the errors being further ordered from highest to lowest;
b) detecting anomalies with all the combinations of columns removing one, and for each combination checking a percentage of records intersecting with said errors, wherein if the number of rows that intersect is null, stopping the process and choosing as a column to eliminate or simulate the one that was removed in the combination;
c) repeating step b), making combinations of columns, removing a number of columns in decreasing order until finding a combination of columns in which a percentage of anomalous records in common with the detection of anomalies is null;
d) upon finding said combination of columns in which the percentage of anomalous records in common with the detection of anomalies is null, eliminating the columns removed in the combination; and
e) eliminating or simulating all the columns that have been removed in step d).

In an embodiment, transformation of the pseudoanonymized data comprises:
setting an initial seed and transforming the pseudoanonymized data into a numerical format, providing a numerical pseudoanonymized data;
segmenting the numerical pseudoanonymized data in groups of at least two elements, wherein each group of at least two elements provides a column;
adding zeros to the numerical to the pseudoanonymized data of each group that when transforming to said numerical data are lost with a zero on the left; and
removing the columns that are constant (i.e. a column having always the same values) and standardizing the numerical pseudoanonymized data, providing a standardized numerical pseudoanonymized data.

In another embodiment, the method also comprises training the second neural network by:
defining a hidden layer of the second neural network with a single neuron and further generating two neurons in a latent layer of the second neural network;
executing at least three iterations of the second process, and optimizing the rest of hyperparameters of the second neural network according to the pseudoanonymized data, and as a result obtaining distortion of the numerical pseudoanonymized data at an output layer of the second neural network;
capturing three decimal places of the distorted numerical pseudoanonymized data and concatenating them in a single column for each subset of neurons, providing a key; and
segmenting the key into groups of three elements and subtract each column from the numerical pseudoanonymized data, providing an error, and using said error, concatenated in a single column, to further re-encrypt the numerical pseudoanonymized data, providing an re-encrypted numerical pseudoanonymized data.

Thus, in the proposed method, the first process, based on anomalies detections, solves the problem of identifying the potential fields in a dataset that can contain relevant information to infer the instance, user, with which this information is associated. This inference is particularly dangerous when there is little data and they have high variance in some field. With this algorithm, it is possible to quantify the sensitive information implicit in each column through the algorithm, so that the loss of information can be counted when dealing with the columns that have potential information for the user to whom the information is associated. The second process, the hashing reinforcement algorithm, solves the problem of the possible decryption of a hash with an extremely powerful computer. This algorithm provides reliability to avoid possible decryption, mainly because the generation of the encrypted data occurs after successive random sampling and subsequent non-linear combinations. This reliability is also based on the fact that the training with the second neural network has been stopped in the initial phase, avoiding a reconstruction of the distribution of the input data, and also the network is configured for the maximum loss of information in the dimensional reduction. It has also been verified that the encrypted data does not have a structure, which together with the fact that the algorithm relies on millions of combinations and hyperparameters that should be tested for a brute force attack, makes the development of the original data practically impossible. In addition, these transformations are supported by a hash, so a second layer of protection should be add that the supposed cracker must overcome. Another aspect that resolves this second process is that it has a key to return to the original data, allowing that if the destination user of the encrypted data has this key, the information exactly as the original can be obtained immediately.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

### Brief Description of the Drawings

The previous and other advantages and features will be more fully understood from the following detailed description of embodiments, with reference to the attached drawings, which must be considered in an illustrative and non-limiting manner, in which:
Fig. 1 is a graph illustrating an overview of where to apply each of the processes/algorithms executed by the proposed method.
Fig. 2 is a graph schematically illustrating how the anomaly detection with the Encoders is performed, according to an embodiment.
Fig. 3 is a graph schematically illustrating the core of the first process/algorithm.
Fig. 4 illustrates another graph of the core of the first process/algorithm.
Fig. 5 is a graph schematically illustrating the main steps executed by the second process/algorithm, according to an embodiment.

### Detailed Description of Preferred Embodiments

Present invention proposes a method for anonymizing data. First, in a preferred embodiment, data about user(s) is divided into three categories and stored in a memory or database. A first category of the data (or medium sensitivity data) refer to data not involving direct identification for the user(s) to whom they are associated, a second category of the data (or high sensitivity data) refer to data involving direct identification for the user(s), and a third category refer to the rest of the data.

The second category (or high sensitivity data) must be completely encrypted, preferably via a SHA-256 hash function, due to the close relationship with the person. Examples of these data are: credit cards, telephone numbers, personal identification documents, etc. The first category (or medium sensitivity data) is maintained unencrypted. Examples of these data are: age, gender, salary, etc. The third category (or rest of the data) does not have a relation to an individual instance by itself or in a group. They are data that must go without any type of encryption. The examples of this type of data are all of those that are not considered as medium and high sensitivity.

According to the preferred embodiment, the proposed method is composed of two processes, executed by a same or different data processing apparatus.

The first process solves the problem that lies in the diffuse border between medium sensitivity and high sensitivity data (i.e. between said first and second categories).These can be the key to inferring the instance behind the data and the proposed method eliminates the risk of considering a variable of medium sensitivity when in reality it should be of high sensitivity. Broadly speaking, this first process (or algorithm) consists of finding combinations of columns in a dataset, where rows represent people and the columns their attributes, with a high risk of containing information to infer who is the user associated with the data.

For the first process, in an embodiment, a Deep Learning technique that consists of detecting anomalies with a type of neural network (first neural network as termed in the claims) known as autoencoder is used. The autoencoder neural network consists of a neural network totally connected to the input layer with the same number of neurons as the output one. In the intermediate layers there is a symmetrical architecture of neurons, so the inner hidden layers on the left are called the encoder layer and the symmetric ones on the right are the decoder layer. This algorithm is trained with an algorithm called backpropagation in which each iteration consists of a product and sum of the weights that connects each neuron of the encoder layer to the decoder for later, after checking the error committed in the output layer with the function cost, perform the updating of the weights from the decoder layer to the decoder. The technique of anomaly detection with autoencoder consists in using the errors of reconstruction per row committed of the output layer at the end of the training, ordering them from highest to lowest and considering those of greater value as candidates for anomaly by registration. In the algorithm this technique is used for a different use of the original: instead of detecting anomalies in the data, user(s) with a high risk of being identified is/are detected.

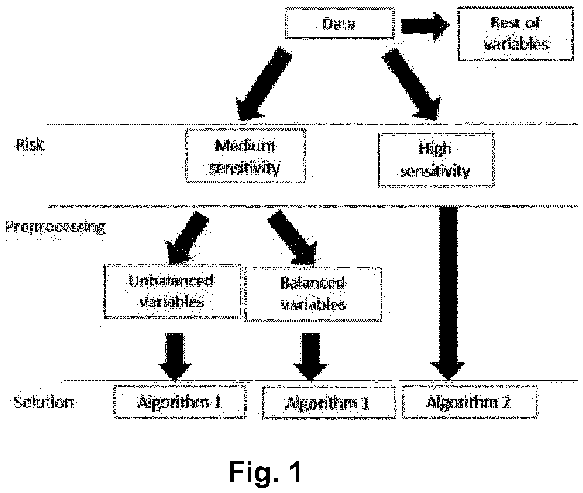

In an embodiment, the process for the first process is as follows. First, the data included in the first category is separated in balanced variables and unbalanced variables (see Fig. 1), taking into account a percentage of different values in each variable. Then, on variable, i.e. the columns, balanced and unbalanced, separately, the following procedure is launched.

The first neural network is trained with all the N columns, of balanced and unbalanced variables, adapting hyperparameters of the first neural network to the data and calculating the reconstruction errors in each row. Later, the errors will be ordered from highest to lowest and in that way, the network will be able to position the records first as the most anomalous.

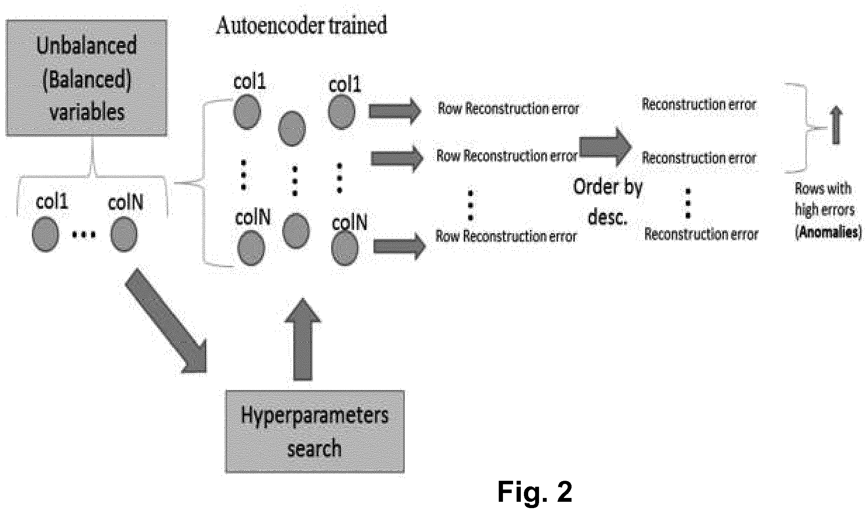

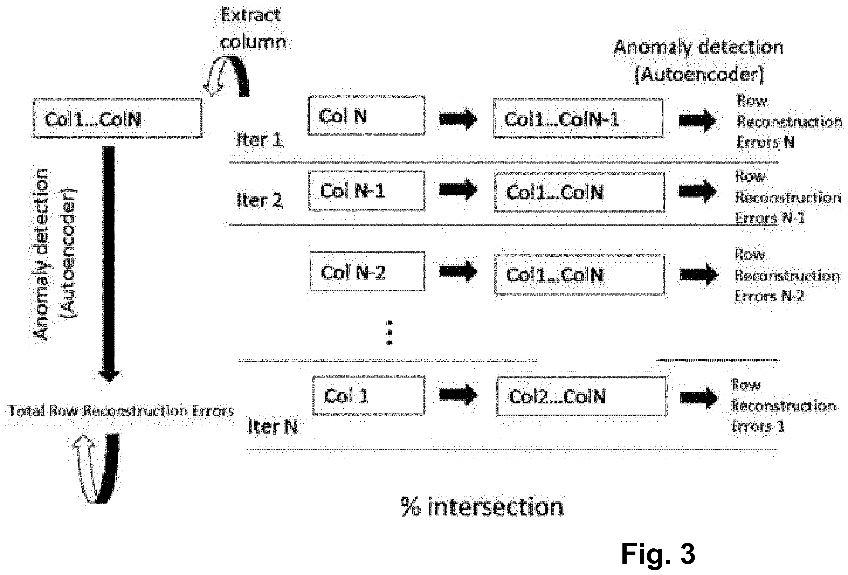

Later, anomaly detection is executed (see Figs. 2 and 3), as in the previous step, with all the combinations of columns removing one, i.e. N-1. In each combination a percentage of records intersecting with the anomalies detection with all the columns are also checked. If the number of rows that intersect is null, the method stops the process and chooses as a column to eliminate or simulate the one that was removed in the combination.

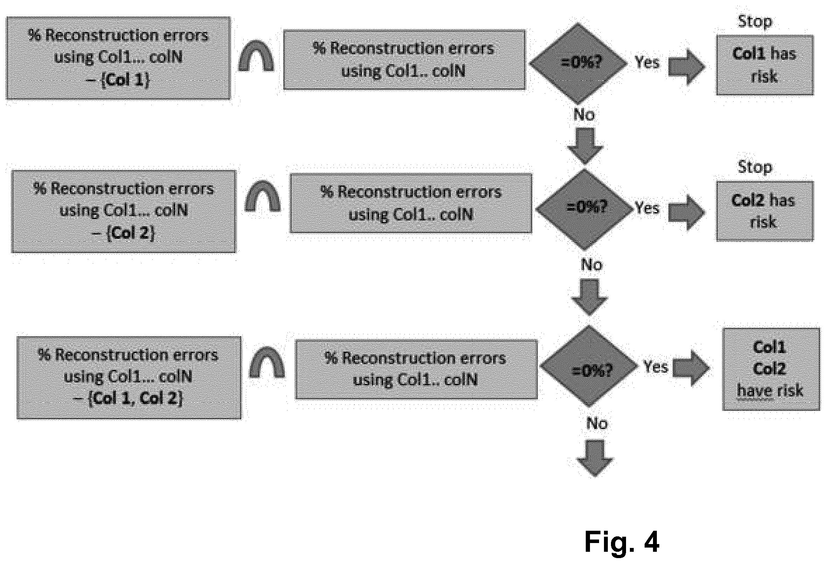

Then, the anomaly detection is repeated, making combinations of columns, removing a number of columns in decreasing order (N-2, N-3 ...) until finding a combination of columns in which the percentage of anomalous records in common with the detection of anomalies including all the fields is null (see Fig. 4). Upon finding said combination of columns in which the percentage of anomalous records in common with the detection of anomalies is null, the columns removed in the combination are eliminated.

Finally, the columns of the set of unbalanced and balanced variables discarded in the process will be eliminated or simulated.

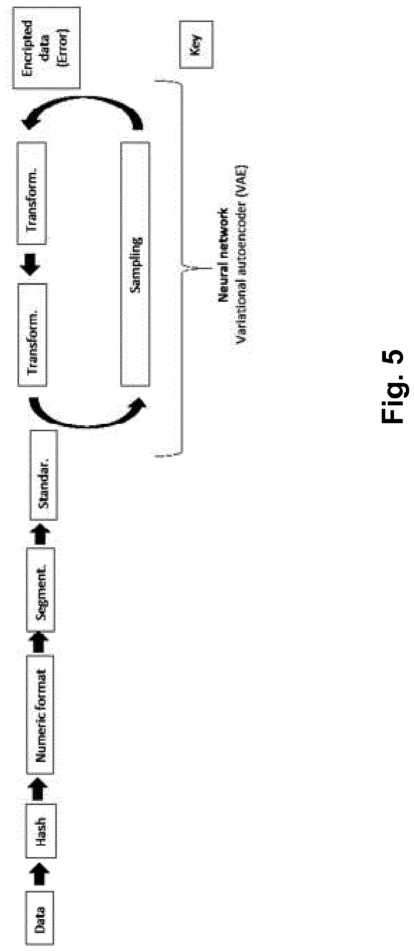

With regard to the second process, this second process is designed to prevent the next generation of computers with high power from deciphering the current encryption systems, allowing reinforcing the current encryption function or hash encryption by putting one more layer(s) on it. Broadly speaking, see Fig. 5, this second process transforms the hashed data into a numerical format, segments them, standardizes them and then submits them to a process through a neural network (second neural network as termed in the claims) that mixes them and samples them to later offer the error as transformed output subtracting to the original data (the pseudoanonymized data). It is possible to recover the pseudoanonymized data with a key associated with each transformation process.

The objective of the second process is to reinforce the encryption function used for encrypting the high sensitivity data, in particular the SHA-256, with a new encryption from the hash. The second process segments the hash into numeric format and processes it with the second neural network, such as a variational autoencoder, an algorithm based on Deep Learning, with special training in which initial information is lost so that the distribution of the input data cannot be inferred.

The second neural network consists, as explained before for the first neural network, in a neural network totally connected to the input layer with the same number of neurons as the output one. In the intermediate layers there is a symmetric architecture of neurons, so the hidden layers on the left are called the encoder layer and the symmetric ones on the right are the decoder layer. A variational autoencoder is a type of autoencoder in which in the layers of neurons between the input and output layer the number of neurons in the encoder layer is reduced. Afterwards, a sampling process of these neurons is carried out to continue in the decoder layer. The objective is to lower the latent distribution of the input data in the dimensional reduction of the encoder layer, however in the proposed algorithm, instead of using the distribution of the data reflected in the neurons of the intermediate hidden layer, the output layer is used as a distortion of the input layer in early stages of training.

In an embodiment, the procedure followed by the second process is the following. First, the columns that have the hash are selected and an initial seed is set, transforming the pseudoanonymized data (i.e. the data related to the user(s) being encrypted with the hash) to numeric format. For example:
- original variable : "T4M1"
- hash: 92801fdee771c141b8cf560e9a0fe0cdeaf4d938043410b35ff8312e
- hash numeric format:
   123456789012345678901234567890123456789012345678901234567890 12345678

Subsequently, the pseudoanonymized data in numerical format is segmented in groups of, preferably, two elements, obtaining for example 34 columns from a hash of 58 elements. Then, the method completes with zeros the hashes that when transforming to a numerical value are lost with a zero on the left. For example of a number in numeric format splitted:
[12,34,56,78,90,12,34,56,78,90,12,34,56,78,90,12,34,56,78,90,12,34,56,78,90, 12,34,56,78,90,12,34,56,78]

Then, the method removes the columns that are constant (i.e. all the fields have the same values) and applies a standardization (e.g. X-Xmean/Xstd, among others) so that the second neural network trains well and stabilizes the loss function. For example a standardized record can be as follows:
[-0.072661, -0.092361, -0.082361, -0.062341, -0.032361, -0.015361, - 0.022461... -0.002161],
having the same length as previous step.

At that moment, the second neural network is trained, taking into account that in the hidden layer of the second neural network, before the two neurons of the latent layer, the method goes down to a single neuron, to cause the maximum loss of information in the latent distribution of the pseudoanonymized data. Moreover, the method makes three iterations or epochs to avoid the complete reconstruction of the distribution of the pseudoanonymized data and optimizes the rest of hyperparameters according to the pseudoanonymized data. An example of the logs in the model with three iterations can be:
Epoch 1/3 60/60 [==============================] - 0s - loss: 1.2385
Epoch 2/3 60/60 [==============================] - 0s - loss: 0.9813
Epoch 3/3 60/60 [==============================] - 0s - loss: 0.8427

Then, the method obtains distortion of the pseudoanonymized data in numerical format in the output layer of the second neural network, and captures the three decimal places of the distorted numerical pseudoanonymized data and concatenates the information in a single column for each variable, i.e. for each subset of neurons, that has entered the encryption process. This data will be the key. For example:
485475484480480474476485477484484479477479483478481487475478476 480478477482476482478479476481475485479

To obtain the encrypted data, the method then segments the key into groups of three elements and subtracts each column from the numerical pseudoanonymized data, providing an error, being this error, concatenated in a single column, the final data as an encrypted hash. For example:
422474385400426472434389470473433454456437461464473440438442429 457468415416465439415384387415430458477

To make the return path using the key from the previous step: the encrypted data of the previous paragraph is divided into three groups and the segment of the corresponding segmented key is added, obtaining the pseudoanonymized data hashed in numerical format, being the transformation to alphanumeric format the last step.

In alternative embodiments, the proposed method can be used to anonymize photographs and videos, through a suitable preprocessing, preferably via a GPU, thus optimizing the processing. In particular, the second process could be used as an application on sensitive data. This use case could be done if each image is transformed to a matrix of numbers, each row of the matrix being converted into a row in the encryption process, applying a hashing transformation first. The result of encrypting a photograph would be another photo with an image without form and with an associated key that would reveal the original photo.

The process of video encryption could be supported by the encryption of photographs previously described.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

The methods and systems discussed above are examples. Various configurations may omit, substitute, or add various method steps or procedures, or system components as appropriate. For instance, in alternative configurations, the methods may be performed in an order different from that described, and/or various stages or steps or modules may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those of skill with an enabling description for implementing described techniques. Various changes may be made in the function and arrangement of elements without departing from the spirit or scope of the disclosure.

Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Furthermore, the example examples described herein may be implemented as logical operations in a computing device in a networked computing system environment. The logical operations may be implemented as: (i) a sequence of computer implemented instructions, steps, or program modules running on a computing device; and (ii) interconnected logic or hardware modules running within a computing device.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

The scope of the present invention is determined by the claims that follow.

## Claims

1. An anonymized data processing method, wherein data about a user is stored in a memory or database, said data being stored divided into at least two different categories, a first category including data not involving direct identification for the user and a second category including data involving direct identification for the user, wherein the data included in the second category being encrypted via an encryption function, providing pseudoanonymized data, the method comprising:
executing, by a data processing apparatus, a first process on said first category, said first process finding combinations of columns in a dataset, where rows represent people and the columns their attributes, with a high risk of containing information to infer who is the user associated with the data through detecting anomalies with a first neural network including an autoencoder; and
executing, by a data processing apparatus, a second process on said second category, said second process transforming and submitting the pseudoanonymized data to a second neural network including a variational autoencoder that mixes and samples the data to provide an encrypted data and an error as transformed output.

2. The method of claim 1, wherein the data included in the first category being separated in balanced variables and unbalanced variables before the execution of the first process, taking into account a percentage of different values in each variable.

3. The method of claim 2, wherein said first neural network, separately, trains the columns of balanced and unbalanced variables, by:
a) adapting hyperparameters of the first neural network to the data, and calculating reconstruction errors in each row, wherein the errors being further ordered from highest to lowest;
b) detecting anomalies with all the combinations of columns removing one, and for each combination checking a percentage of records intersecting with said errors, wherein if the number of rows that intersect is null, stopping the process and choosing as a column to eliminate or simulate the one that was removed in the combination;
c) repeating step b), making combinations of columns, removing a number of columns in decreasing order until finding a combination of columns in which a percentage of anomalous records in common with the detection of anomalies is null;
d) upon finding said combination of columns in which the percentage of anomalous records in common with the detection of anomalies is null, eliminating the columns removed in the combination; and
e) eliminating or simulating all the columns that have been removed in step d).

4. The method of claim 1, wherein the encryption function comprising a SHA-256 hash.

5. The method of claim 1 or 4, wherein said transformation of the pseudoanonymized data comprises:
setting an initial seed and transforming the pseudoanonymized data into a numerical format, providing a numerical pseudoanonymized data;
segmenting the numerical pseudoanonymized data in groups of at least two elements, wherein each group of at least two elements provides a column;
adding zeros to the numerical to the pseudoanonymized data of each group that when transforming to said numerical data are lost with a zero on the left; and
removing the columns that are constant and standardizing the numerical pseudoanonymized data, providing a standardized numerical pseudoanonymized data.

6. The method of claim 5, comprising training the second neural network by:
defining a hidden layer of the second neural network with a single neuron and further generating two neurons in a latent layer of the second neural network;
executing at least three iterations of the second process, and optimizing hyperparameters of the second neural network according to the pseudoanonymized data, and as a result obtaining distortion of the numerical pseudoanonymized data at an output layer of the second neural network;
capturing three decimal places of the distorted numerical pseudoanonymized data and concatenating them in a single column for each subset of neurons, providing a key; and
segmenting the key into groups of three elements and subtract each column from the numerical pseudoanonymized data, providing an error, and using said error, concatenated in a single column, to further re-encrypt the numerical pseudoanonymized data, providing an re-encrypted numerical pseudoanonymized data.

7. The method of claim 1, wherein:
said first category comprises data including age, gender and/or salary; and
said second category comprises data including payment cards identification numbers, telephone numbers and/or personal identification numbers.

8. A computer program product comprising program code instructions that when executed by a processor of a computing device implement an anonymized data processing method according to claim 1.
